# FASCICULE DE BREVET EUROPEEN

(11) **EP 3 948 820 B1**
(45) Date de publication et mention de la délivrance du brevet: **03.05.2023**
(21) Numéro de dépôt: 20714934.5
(22) Date de dépôt: 18.03.2020
(51) Int. Cl.: G08G 1/0967, B60W 30/14, B60W 50/00, B60W 10/04, B60W 10/18, B60W 30/18

(54) **PROCÉDÉ DE SÉCURISATION DE FRANCHISSEMENT D'UN FEU DE CIRCULATION PAR UN VÉHICULE, AINSI QUE PRODUIT PROGRAMME D'ORDINATEUR CORRESPONDANT**
VERFAHREN ZUR GEWÄHRLEISTUNG, DASS EIN FAHRZEUG EINE AMPEL SICHER PASSIEREN KANN, UND ENTSPRECHENDES COMPUTERPROGRAMMPRODUKT
METHOD FOR ENSURING THAT A VEHICLE CAN SAFELY PASS A TRAFFIC LIGHT, AND CORRESPONDING COMPUTER PROGRAM PRODUCT

(30) Priorité: 25.03.2019 FR 1903039
(43) Date de publication de la demande: 09.02.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: GACOIN, Nicolas, 78280 Guyancourt (FR); TRICAUD, Christophe, 27120 Pacy sur Eure (FR)
(74) Mandataire: Renault Group
(86) Numéro de dépôt international: PCT/EP2020/057366
(87) Numéro de publication internationale: WO 2020/193295

(56) Documents cités:
- DE-A1-102012 219 922
- DE-T5-112013 007 046
- US-A1- 2014 046 509
- US-A1- 2017 120 923
- US-A1- 2018 141 461

## Description

L'invention concerne le domaine des dispositifs et procédés visant à fluidifier la circulation des véhicules sur les routes.

Il est connu de l'état de la technique des services de trafic visant à aider un conducteur à franchir un feu de circulation à l'état ouvert, par la communication d'une vitesse optimale à adopter. Le conducteur adopte alors ladite vitesse optimale, ce qui lui permet d'arriver devant le feu de circulation à l'état ouvert, lui évitant de s'arrêter.

À titre d'exemple, le document US 2018/141461 A1 divulgue un système permettant de définir un profile de vitesse véhicule en fonction de la distance par rapport à un feu de circulation et en fonction de l'état dudit feu.

De tels services de trafic permettent la fluidification du trafic routier, des gains de temps de transport, des réductions de coûts énergétiques et d'impacts environnementaux, et une amélioration de la sécurité routière.

Lorsque le véhicule se situe à une distance prédéterminée du feu de circulation, par exemple 500 mètres, le service de trafic transmet au véhicule l'état du feu de circulation sur le véhicule et la vitesse optimale à adopter.

Un conducteur utilisant un tel service de trafic est un conducteur actif du véhicule. Il peut adapter la vitesse de son véhicule selon la vitesse conseillée, mais peut aussi décider de ralentir, accélérer ou freiner en fonction de son ressenti et de la situation. Si à l'approche du feu de circulation, l'état du feu de circulation n'est pas conforme à la prédiction faite par le service de trafic, le conducteur peut réagir de manière appropriée pour ne pas enfreindre les règles du code de la route.

L'état d'un feu de circulation peut ne pas être conforme à la prédiction par exemple à la suite d'un changement du cadencement des feux de circulation d'un carrefour pour permettre le franchissement d'un véhicule prioritaire, d'un véhicule de transport en commun tel qu'un bus, un tramway ou un train.

L'état d'un feu de circulation peut ne pas être conforme à la prédiction à la suite d'une panne, une maintenance, une défaillance, un dérèglement du service de trafic.

Dans le cas d'un système d'aide à la conduite embarqué, et dans lequel le conducteur est beaucoup plus passif parce-que le véhicule régule lui-même sa vitesse à l'approche d'un feu de circulation, c'est au véhicule de réagir de manière appropriée si l'état du feu de circulation n'est pas conforme à la prédiction faite par un algorithme interne au véhicule.

L'état de la technique ne décrit pas un tel système embarqué sécuritaire.

L'invention porte sur un procédé de sécurisation de franchissement d'un feu de circulation par un véhicule, le véhicule comprenant un calculateur apte à déterminer une distance entre le véhicule et ledit feu de circulation, un régulateur de vitesse, et un capteur de feu apte à détecter l'état dudit feu de circulation parmi un état fermé et un état ouvert, le procédé comprenant les étapes suivantes :
- une étape de réception de données de trafic, dans laquelle le calculateur reçoit des données de trafic émises depuis un dispositif externe, les données de trafic comprenant un temps de changement d'état dudit feu de circulation, pour un changement de l'état fermé à l'état ouvert, le calculateur déterminant en outre une distance courante entre le véhicule et le feu de circulation sensiblement au moment de la réception des données,
- une étape de détermination d'un profil de vitesse, dans laquelle le calculateur détermine, en fonction du temps de changement d'état et de la distance courante, un profil de vitesse à adopter par le véhicule selon la distance du véhicule au feu de circulation, pour un franchissement par le véhicule du feu de circulation à l'état ouvert, sans arrêt du véhicule,
- une étape de détermination d'une distance de contrôle, dans laquelle le calculateur détermine, en fonction du profil de vitesse, une distance de contrôle à laquelle un freinage dynamique du véhicule garantit un arrêt sécurisé et confortable du véhicule, avant la position dudit feu de circulation,
- une étape de régulation dans laquelle le régulateur de vitesse régule la vitesse du véhicule en fonction de la distance du véhicule au feu de circulation, selon le profil de vitesse,
- une étape de détection d'état du feu de circulation, dans laquelle le capteur de feu détermine l'état dudit feu de circulation lorsque le véhicule est à une distance du feu de circulation égale à la distance de contrôle,
- une étape de décision, dans laquelle le calculateur active un freinage dynamique du véhicule si le feu de circulation est à l'état fermé, et dans laquelle le calculateur laisse le régulateur de vitesse réguler la vitesse du véhicule selon le profil de vitesse, si le feu de circulation est à l'état ouvert.

Selon un aspect de l'invention, le profil de vitesse comprend un plateau de vitesse sur lequel la vitesse est constante et égale à une vitesse de franchissement, en mètres par seconde, le plateau de vitesse s'étendant sur une distance en mètres, supérieure à une valeur correspondant à ladite vitesse de franchissement multipliée par un temps de plateau compris entre une seconde et trois secondes.

Selon un aspect de l'invention, la vitesse de franchissement est comprise entre 7 mètres par seconde et 20 mètres par seconde.

Selon un aspect de l'invention, la distance de contrôle est fonction d'une décélération de freinage prédéterminée comprise entre 2,5 mètres par seconde carrée et 4 mètres par seconde carrée.

Selon un aspect de l'invention, la distance de contrôle est égale à la vitesse de franchissement au carré, divisée par le double de la décélération de freinage.

Selon un aspect de l'invention, le capteur de feu comprend un dispositif de vision tel qu'une caméra, et un classifieur apte à distinguer un feu de circulation à l'état ouvert d'un feu de circulation à l'état fermé, sur une prise de vue dudit dispositif de vision.

L'invention concerne également un produit programme d'ordinateur comprenant les instructions de programme mettant en oeuvre au moins une étape du procédé, lorsque les instructions de programme sont exécutées par un ordinateur.

D'autres avantages et caractéristiques de l'invention apparaîtront à la lecture de la description et des dessins.
La figure 1 représente schématiquement un véhicule à l'approche d'un feu de circulation.
La figure 2a représente un feu de circulation dans un état fermé.
La figure 2b représente un feu de circulation dans un état ouvert.
La figure 2c représente un feu de circulation dans un état intermédiaire.
La figure 3 représente schématiquement les étapes du procédé selon l'invention.
La figure 4 représente un profil de vitesse en fonction de la distance du véhicule au feu de circulation.

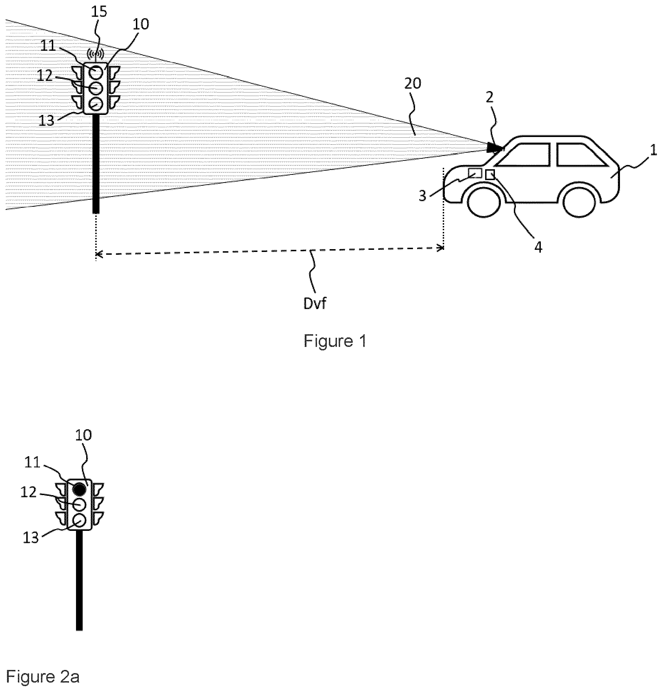

La figure 1 représente un véhicule 1 comprenant un calculateur 4, un régulateur de vitesse 3 et un capteur de feu 2.

Le capteur de feu 2 est apte à détecter l'état d'un feu de circulation 10 parmi un état fermé et un état ouvert.

Un état ouvert du feu de circulation 10 indique à un conducteur du véhicule 1 qu'il peut franchir le feu de circulation 10, la voie de circulation sur laquelle se situe le véhicule 1 étant ouverte.

Un état fermé du feu de circulation 10 indique au conducteur du véhicule 1 qu'il doit s'arrêter avant le feu de circulation 10, sans le franchir, la voie de circulation sur laquelle se situe le véhicule 1 étant fermée au-delà du feu de circulation 10.

Le capteur de feu 2 comprend avantageusement un dispositif de vision, de préférence une caméra frontale, localisée au niveau d'un rétroviseur central du véhicule 1. Le capteur de feu 2 peut comprendre un autre type de dispositif de vision, tel qu'un LIDAR. Le capteur de feu 2 peut être localisé en un autre endroit, par exemple sur le toit du véhicule 1.

Le capteur de feu 2 comprend un champ de vision 20 apte à couvrir un environnement du véhicule 1 comprenant des feux de circulation, par exemple sur une distance d'au moins 100 mètres.

Le capteur de feu 2 comprend en outre un classifieur apte à distinguer un feu de circulation à l'état ouvert d'un feu de circulation à l'état fermé, sur une prise de vue du dispositif de vision. Une prise de vue peut être une image brute, reconstituée, retouchée ou une pseudo image construite à partir de données numériques.

Le calculateur 4 est apte à recevoir des données de trafic émises par un dispositif externe tel qu'un serveur ou le feu de circulation 10.

Le feu de circulation 10 de la figure 1 comprend un émetteur 15 apte à émettre des données de trafic à destination d'un récepteur du calculateur 4 du véhicule 1.

Les données de trafic comprennent un temps de changement d'état du feu de circulation 10, pour un changement de l'état fermé à l'état ouvert.

De manière plus générique, les données de trafic comprennent un temps de changement d'état du feu de circulation 10 et un état courant du feu de circulation 10.

Un temps de changement d'état du feu de circulation 10 associé à un état courant fermé du feu de circulation 10 correspond à un temps de changement d'état du feu de circulation 10, pour un changement de l'état fermé à l'état ouvert.

Un temps de changement d'état du feu de circulation 10 associé à un état courant ouvert du feu de circulation 10 correspond à un temps de changement d'état du feu de circulation 10, pour un changement de l'état ouvert à l'état fermé.

Sur la figure 1, le véhicule 1 est localisé à une distance Dvf du feu de circulation 10.

Le feu de circulation 10 est dans le champ de vision 20 du capteur de feu 2 du véhicule 1. Le capteur de feu 2 est apte à détecter l'état du feu de circulation 10.

Le calculateur 4 est apte à déterminer la distance Dvf entre le véhicule 1 et le feu de circulation 10, par exemple à l'aide d'une caméra ou de données de géolocalisation.

L'émetteur 15 du feu de circulation 10 envoie des données de trafic au calculateur 4 du véhicule 1, les données de trafic comprenant un temps de changement d'état du feu de circulation 10, pour un changement de l'état fermé à l'état ouvert. Le calculateur 4 est apte à déterminer, en fonction de la distance Dvf entre le véhicule 1 et le feu de circulation 10, un profil de vitesse permettant un franchissement du feu de circulation 10, sans arrêt du véhicule.

Le calculateur 4 est apte à commander le régulateur de vitesse 3 selon ledit profil de vitesse qui est fonction de la distance Dvf entre le véhicule 1 et le feu de circulation 10.

Le régulateur de vitesse 3 gère la vitesse V du véhicule sans l'intervention du conducteur du véhicule 1. Le conducteur est passif vis-à-vis de la gestion de la vitesse V du véhicule 1.

Le feu de circulation 10 est par exemple un feu tricolore comprenant un feu rouge 11, un feu vert 13 et un feu orange 12. Cet exemple n'est pas limitatif, le feu de circulation pouvant être bicolore ou quadricolore.

Lorsque le feu rouge 11 est allumé, comme représenté sur la figure 2a, le feu de circulation 10 est à l'état fermé.

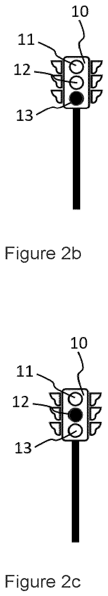

Lorsque le feu vert 13 est allumé, comme représenté sur la figure 2b, le feu de circulation 10 est à l'état ouvert.

Sur la figure 2c, le feu orange 12 est allumé, le feu de circulation 10 est dans un état intermédiaire. L'état intermédiaire peut être un état de transition entre l'état ouvert et l'état fermé et/ou entre l'état fermé et l'état ouvert, pour indiquer à un conducteur le changement imminent d'état du feu de l'état ouvert vers l'état fermé et/ou de l'état fermé vers l'état ouvert.

L'état intermédiaire d'un feu de circulation 10 peut également indiquer au conducteur une défaillance dudit feu de circulation 10, par exemple lorsque le feu orange 12 s'allume par intermittence, c'est-à-dire lorsque le feu orange 12 est clignotant.

Un feu de circulation 10 au sens de l'invention peut comprendre un état ouvert et un état fermé qui ne sont pas notifiés par l'allumage d'un feu, mais par exemple par le mouvement d'une barrière entre deux positions distinctes ou un changement de pictogramme.

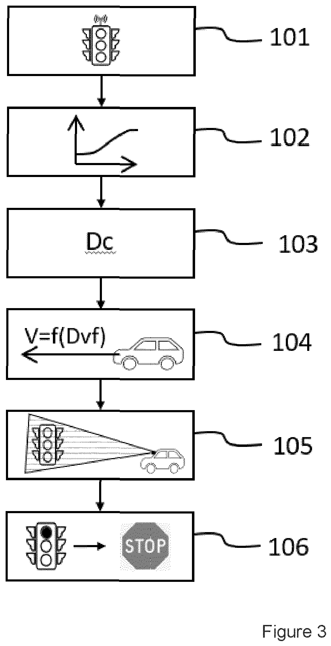

La figure 3 représente schématiquement les étapes du procédé selon l'invention.

Selon une étape de réception de données de trafic 101, le calculateur 4 reçoit des données de trafic émises depuis un dispositif externe, par exemple depuis l'émetteur 15 du feu de circulation 10, les données de trafic comprenant un temps de changement d'état d'un feu de circulation 10, pour un changement de l'état fermé à l'état ouvert. Le calculateur 4 détermine, une distance courante Dvfc entre le véhicule 1 et le feu de circulation 10 sensiblement au moment de la réception des données de trafic.

Le calculateur 4 reçoit des données de trafic émises depuis un dispositif externe par exemple lorsque le véhicule 1 est à une distance du feu de circulation 10 inférieure à cinq cents mètres.

Dans le cas où les données de trafic sont émises en continu, le calculateur 4 les prend en compte lorsque le véhicule 1 est à une distance du feu de circulation inférieure à cinq cents mètres.

Le calculateur 4 est apte à déterminer la distance courante Dvfc entre le véhicule 1 et le feu de circulation 10 par exemple à partir de données de géolocalisation du véhicule 1 et une cartographie comprenant la position géographique des feux de circulation.

Selon une alternative, les données de trafic peuvent comprendre les coordonnées du feu de circulation 10 permettant plus facilement au calculateur 4 de déterminer la distance courante Dvfc entre le véhicule 1 et le feu de circulation 10.

La distance courante Dvfc entre le véhicule 1 et le feu de circulation 10 peut également être déterminée à l'aide d'un capteur tel qu'une caméra, un LIDAR, un radar.

Selon une étape de détermination d'un profil de vitesse 102, le calculateur 4 détermine, en fonction du temps de changement d'état et de la distance courante Dvfc, un profil de vitesse à adopter par le véhicule 1 selon la distance Dvf du véhicule 1 au feu de circulation 10, pour un franchissement par le véhicule 1 du feu de circulation 10 à l'état ouvert, sans arrêt du véhicule 1.

Par exemple, le profil de vitesse comprend une décélération, puis un plateau de vitesse constante d'une durée de quelques secondes.

Selon une étape de détermination d'une distance de contrôle 103, le calculateur 4 détermine, en fonction du profil de vitesse 50 précédemment déterminé, une distance de contrôle De à laquelle un freinage dynamique du véhicule 1 garantit un arrêt sécurisé et confortable du véhicule 1, avant la position dudit feu de circulation 10.

A la différence d'un freinage d'urgence qui peut occasionner un inconfort et une secousse du conducteur par une décélération trop brutale du véhicule, le freinage dynamique correspond à une décélération de freinage du véhicule comprise entre 2,5 mètres par seconde carrée et 4 mètres par seconde carrée.

Selon une étape de régulation 104, le régulateur de vitesse 3 régule la vitesse du véhicule 1 en fonction de la distance Dvf du véhicule 1 au feu de circulation 10, selon le profil de vitesse.

Ainsi, le véhicule 1 roule en direction du feu de circulation 10 à une vitesse V, en suivant le profil de vitesse, le conducteur n'ayant pas besoin d'utiliser ni pédale d'accélérateur, ni pédale de frein du véhicule 1. Le régulateur de vitesse 3 suit le profil de vitesse pour lequel, à une distance Dvf entre le véhicule 1 et le feu de circulation 10, correspond une vitesse V de véhicule 1 prédéterminée.

Lorsque la distance Dvf du véhicule 1 au feu de circulation 10 est égale à la distance de contrôle Dc, le capteur de feu 2 détermine l'état dudit feu de circulation 10 selon une étape de détection d'état du feu de circulation 105.

Selon une étape de décision 106, le calculateur 4 active un freinage dynamique du véhicule 1 si le feu de circulation 10 est à l'état fermé. Si le feu de circulation 10 est à l'état ouvert, le calculateur 4 laisse le régulateur de vitesse 3 réguler la vitesse V du véhicule 1 selon le profil de vitesse.

Le feu de circulation 10 peut comprendre en outre un état intermédiaire comme illustré sur la figure 2c.

De manière préférentielle, si le capteur de feu 2 détermine que le feu de circulation 10 est dans l'état intermédiaire selon l'étape de détection d'état du feu de circulation 105, alors le calculateur 4 active un freinage dynamique du véhicule 1, selon l'étape de décision 106.

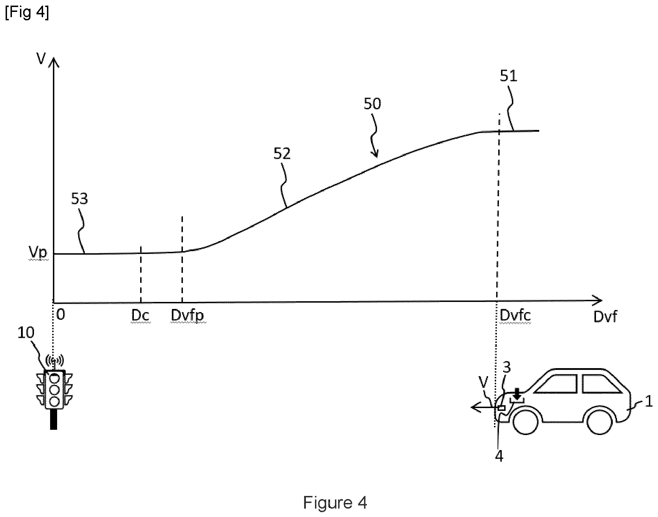

La figure 4 illustre un exemple de profil de vitesse 50 pour la réalisation de l'invention.

Sur l'axe des abscisses, on trouve la distance Dvf entre le véhicule 1 et le feu de circulation 10. L'origine correspond à la position du véhicule 1 au niveau du feu de circulation 10, la distance Dvf entre le véhicule 1 et le feu de circulation 10 étant alors nulle. Sur l'axe des ordonnées, on trouve la vitesse V du véhicule 1.

Au-delà de la distance courante Dvfc, la vitesse V est par exemple constante, comme illustré sur la partie de courbe 51 représentant la vitesse V du véhicule 1 en fonction de la distance Dvf entre le véhicule 1 et le feu de circulation 10.

Le profil de vitesse 50 comprend une phase de décélération 52 qui s'étend sur l'axe des abscisses entre la distance courante Dvfc et une distance de plateau Dvfp. Pendant cette phase de décélération 52, la décélération du véhicule 1 est par exemple comprise, sur la majeure partie de la courbe, entre 0,5 mètre par seconde carrée et 1 mètre par seconde carrée, en particulier loin des abscisses correspondant à la distance de plateau Dvfp et à la distance courante Dvfc.

Le profil de vitesse 50 comprend avantageusement un plateau de vitesse 53 sur lequel la vitesse est sensiblement constante et égale à une vitesse de franchissement Vp, en mètres par seconde.

Le plateau de vitesse 53 s'étend sur une distance de plateau Dvfp en mètres, du véhicule 1 au feu de circulation 2, supérieure à une valeur correspondant à ladite vitesse de franchissement Vp multipliée par un temps de plateau compris entre une seconde et trois secondes.

De préférence, la vitesse de franchissement Vp est comprise entre 7 mètres par seconde et 20 mètres par seconde.

Par exemple, pour une vitesse de franchissement Vp égale à 10 mètres par seconde et un temps de plateau de 2 secondes, le plateau de vitesse s'étend au moins sur une distance de plateau Dvfp du véhicule 1 au feu de circulation 2 égale à 20 mètres et dont l'origine est située au niveau du feu de circulation 10.

De manière avantageuse, la distance de contrôle De est égale à la vitesse de franchissement Vp au carré, divisée par le double de la décélération de freinage.

Pour une décélération de freinage du véhicule égale à 3 mètres par seconde carrée et une vitesse de franchissement Vp égale à 10 mètres, la distance de contrôle est égale à 16,7 mètres.

Pour un plateau de vitesse s'étendant sur une distance de plateau Dvfp de 20 mètres, la vitesse V du véhicule 1 est déjà stabilisée à la vitesse de franchissement Vp, lors de l'exécution de l'étape de détection d'état du feu de circulation 105, par le capteur de feu 2.

## Revendications

1. Procédé de sécurisation de franchissement d'un feu de circulation (10) par un véhicule (1), le véhicule (1) comprenant un calculateur (4) apte à déterminer une distance (Dvf) entre le véhicule (1) et ledit feu de circulation (10), un régulateur de vitesse (3), et un capteur de feu (2) apte à détecter l'état dudit feu de circulation (10) parmi un état fermé et un état ouvert, le procédé comprenant les étapes suivantes :
- une étape de réception de données de trafic (101), dans laquelle le calculateur (4) reçoit des données de trafic émises depuis un dispositif externe, les données de trafic comprenant un temps de changement d'état dudit feu de circulation (10), pour un changement de l'état fermé à l'état ouvert, le calculateur (4) déterminant en outre une distance courante (Dvfc) entre le véhicule (1) et le feu de circulation (10) sensiblement au moment de la réception des données,
- une étape de détermination d'un profil de vitesse (102), dans laquelle le calculateur (4) détermine, en fonction du temps de changement d'état et de la distance courante (Dvfc), un profil de vitesse (50) à adopter par le véhicule (1) selon la distance (Dvf) du véhicule (1) au feu de circulation (10), pour un franchissement par le véhicule (1) du feu de circulation (10) à l'état ouvert, sans arrêt du véhicule (1),
- une étape de détermination d'une distance de contrôle (103), dans laquelle le calculateur (4) détermine, en fonction du profil de vitesse (50), une distance de contrôle (Dc) à laquelle un freinage dynamique du véhicule (1) garantit un arrêt sécurisé et confortable du véhicule (1), avant la position dudit feu de circulation (10), et
- une étape de régulation (104) dans laquelle le régulateur de vitesse (3) régule la vitesse (V) du véhicule en fonction de la distance (Dvf) du véhicule (1) au feu de circulation (10), selon le profil de vitesse (50), **caractérisé en ce que** ledit procédé comprend en outre
- une étape de détection d'état du feu de circulation (105), dans laquelle le capteur de feu (2) détermine l'état dudit feu de circulation (10) lorsque le véhicule (1) est à une distance du feu de circulation (10) égale à la distance de contrôle (Dc), et
- une étape de décision (106), dans laquelle le calculateur (4) active un freinage dynamique du véhicule (1) si le feu de circulation (10) est à l'état fermé, et dans laquelle le calculateur laisse le régulateur de vitesse (3) réguler la vitesse (V) du véhicule (1) selon le profil de vitesse (50), si le feu de circulation (10) est à l'état ouvert.

2. Procédé selon la revendication précédente, le profil de vitesse (50) comprenant un plateau de vitesse sur lequel la vitesse est constante et égale à une vitesse de franchissement (Vp), en mètres par seconde, le plateau de vitesse s'étendant sur une distance (Dvf) en mètres, supérieure à une valeur correspondant à ladite vitesse de franchissement (Vp) multipliée par un temps de plateau compris entre une seconde et trois secondes.

3. Procédé selon la revendication précédente, la vitesse de franchissement (Vp) étant comprise entre 7 mètres par seconde et 20 mètres par seconde.

4. Procédé selon la revendication précédente, la distance de contrôle (Dc) étant fonction d'une décélération de freinage prédéterminée comprise entre 2,5 mètres par seconde carrée et 4 mètres par seconde carrée.

5. Procédé selon l'une quelconque des revendications 2 ou 3 et selon la revendication 4, la distance de contrôle (Dc) étant égale à la vitesse de franchissement (Vp) au carré, divisée par le double de la décélération de freinage.

6. Procédé selon l'une quelconque des revendications précédentes, le capteur de feu (2) comprenant un dispositif de vision tel qu'une caméra, et un classifieur apte à distinguer un feu de circulation (10) à l'état ouvert d'un feu de circulation (10) à l'état fermé, sur une prise de vue dudit dispositif de vision.

7. Produit programme d'ordinateur comprenant les instructions de programme mettant en oeuvre les étapes du procédé selon l'une quelconque des revendications précédentes, lorsque les instructions de programme sont exécutées par un dispositif de contrôle d'un véhicule (1) comprenant un calculateur (4) apte à déterminer une distance (Dvf) entre le véhicule (1) et un feu de circulation (10), un régulateur de vitesse (3), et un capteur de feu (2) apte à détecter l'état dudit feu de circulation (10) parmi un état fermé et un état ouvert.

## Patentansprüche

1. Verfahren zur Absicherung der Überquerung einer Ampel (10) durch ein Fahrzeug (1), wobei das Fahrzeug (1) einen Rechner (4), der geeignet ist, einen Abstand (Dvf) zwischen dem Fahrzeug (1) und der Ampel (10) zu bestimmen, einen Geschwindigkeitsregler (3) und einen Ampelsensor (2) umfasst, der geeignet ist, den Zustand der Ampel (10) aus einem geschlossenen Zustand und einem offenen Zustand zu erfassen, wobei das Verfahren die folgenden Schritte umfasst:
- einen Schritt des Empfangens von Verkehrsdaten (101), wobei der Rechner (4) Verkehrsdaten empfängt, die von einer externen Vorrichtung ausgesendet werden, wobei die Verkehrsdaten einen Zeitpunkt der Zustandsänderung der Ampel (10) für eine Änderung vom geschlossenen Zustand zum geöffneten Zustand umfasst, wobei der Rechner (4) ferner einen aktuellen Abstand (Dvfc) zwischen dem Fahrzeug (1) und der Ampel (10) im Wesentlichen zum Zeitpunkt des Empfangs der Daten bestimmt,
- einen Schritt des Bestimmens eines Geschwindigkeitsprofils (102), wobei der Rechner (4) je nach dem Zustandsänderungszeitpunkt und dem aktuellen Abstand (Dvfc) ein Geschwindigkeitsprofil (50) bestimmt, das vom Fahrzeug (1) gemäß dem Abstand (Dvf) des Fahrzeugs (1) zur Ampel (10) für eine Überquerung der Ampel (10) durch das Fahrzeug (1) im offenen Zustand ohne Anhalten des Fahrzeugs (1) anzuwenden ist,
- einen Schritt des Bestimmens eines Kontrollabstands (103), wobei der Rechner (4) je nach dem Geschwindigkeitsprofil (50) einen Kontrollabstand (Dc) bestimmt, bei dem eine dynamische Bremsung des Fahrzeugs (1) einen sicheren und komfortablen Halt des Fahrzeugs (1) vor der Position der Ampel (10) gewährleistet,
und
- einen Schritt des Regelns (104), wobei der Geschwindigkeitsregler (3) die Geschwindigkeit (V) des Fahrzeugs je nach dem Abstand (Dvf) des Fahrzeugs (1) zur Ampel (10) gemäß dem Geschwindigkeitsprofil (50) regelt, **dadurch gekennzeichnet, dass** das Profil ferner Folgendes umfasst
- einen Schritt des Erfassens des Zustands der Ampel (105), wobei der Ampelsensor (2) den Zustand der Ampel (10) bestimmt, wenn sich das Fahrzeug (1) in einem Abstand zur Ampel (10) befindet, der gleich dem Kontrollabstand (Dc) ist, und
- einen Schritt des Entscheidens (106), wobei der Rechner (4) eine dynamische Bremsung des Fahrzeugs (1) aktiviert, wenn sich die Ampel (10) im geschlossenen Zustand befindet, und wobei der Rechner den Geschwindigkeitsregler (3) die Geschwindigkeit (V) des Fahrzeugs (1) gemäß dem Geschwindigkeitsprofil (50) regeln lässt, wenn sich die Ampel (10) im offenen Zustand befindet.

2. Verfahren nach dem vorhergehenden Anspruch, wobei das Geschwindigkeitsprofil (50) ein Geschwindigkeitsplateau umfasst, auf dem die Geschwindigkeit konstant und gleich einer Überquerungsgeschwindigkeit in Metern pro Sekunde ist, wobei sich das Geschwindigkeitsplateau über eine Strecke (Dvf) in Metern erstreckt, die größer als ein Wert ist, der der Überquerungsgeschwindigkeit (Vp) multipliziert mit einer Plateauzeit zwischen einer Sekunde und drei Sekunden entspricht.

3. Verfahren nach dem vorhergehenden Anspruch, wobei die Überquerungsgeschwindigkeit (Vp) zwischen 7 Metern pro Sekunde und 20 Metern pro Sekunde liegt.

4. Verfahren nach dem vorhergehenden Anspruch, wobei der Kontrollabstand (Dc) von einer vorbestimmten Bremsverzögerung abhängig ist, die zwischen 2,5 Metern pro Sekunde zum Quadrat und 4 Metern pro Sekunde zum Quadrat liegt.

5. Verfahren nach einem der Ansprüche 2 oder 3 und nach Anspruch 4, wobei der Kontrollabstand (Dc) gleich der Überquerungsgeschwindigkeit (Vp) zum Quadrat geteilt durch das Doppelte der Bremsverzögerung ist.

6. Verfahren nach einem der vorhergehenden Ansprüche, wobei der Ampelsensor (2) eine Sichtvorrichtung wie eine Kamera und einen Klassifizierer umfasst, der geeignet ist, eine Ampel (10) im offenen Zustand von einer Ampel (10) im geschlossenen Zustand auf einer Bildaufnahme der Sichtvorrichtung zu unterscheiden.

7. Computerprogrammprodukt umfassend die Programmanweisungen, die die Schritte des Verfahrens nach einem der vorhergehenden Ansprüche umsetzen, wenn die Programmanweisungen von einer Steuerungsvorrichtung eines Fahrzeugs (1) ausgeführt werden, das einen Rechner (4), der geeignet ist, einen Abstand (Dvf) zwischen dem Fahrzeug (1) und einer Ampel (10) zu bestimmen, einen Geschwindigkeitsregler (3) und einen Ampelsensor (2) umfasst, der geeignet ist, den Zustand der Ampel (10) aus einem geschlossenen Zustand und einem offenen Zustand zu erfassen.

## Claims

1. Method for ensuring that a vehicle (1) can safely cross a traffic light (10), the vehicle (1) comprising a computer (4) capable of determining a distance (Dvf) between the vehicle (1) and said traffic light (10), a speed regulator (3), and a light sensor (2) capable of detecting the state of said traffic light (10) out of a stop state and a go state, the method comprising the following steps:
- a step of reception of traffic data (101), in which the computer (4) receives traffic data transmitted from an external device, the traffic data comprising a time of change of state of said traffic light (10), for a change from the stop state to the go state, the computer (4) further determining a current distance (Dvfc) between the vehicle (1) and the traffic light (10) substantially at the moment of reception of the data,
- a step of determination of a speed profile (102), in which the computer (4) determines, as a function of the time of change of state and of the current distance (Dvfc), a speed profile (50) to be adopted by the vehicle (1) according to the distance (Dvf) from the vehicle (1) to the traffic light (10), for the vehicle (1) to cross the traffic light (10) in the go state, without the vehicle (1) stopping,
- a step of determination of a control distance (103), in which the computer (4) determines, as a function of the speed profile (50), a control distance (Dc) at which a dynamic braking of the vehicle (1) guarantees a safe and comfortable stopping of the vehicle (1), before the position of said traffic light (10),
- a regulation step (104) in which the speed regulator (3) regulates the speed (V) of the vehicle as a function of the distance (Dvf) from the vehicle (1) to the traffic light (10), according to the speed profile (50), **characterized in that** said method further comprises
- a step of detection of the state of the traffic light (105), in which the light sensor (2) determines the state of said traffic light (10) when the vehicle (1) is at a distance from the traffic light (10) equal to the control distance (Dc), and
- a decision step (106), in which the computer (4) activates a dynamic braking of the vehicle (1) if the traffic light (10) is in the stop state, and in which the computer lets the speed regulator (3) regulate the speed (V) of the vehicle (1) according to the speed profile (50), if the traffic light (10) is in the go state.

2. Method according to the preceding claim, the speed profile (50) comprising a speed level over which the speed is constant and equal to a crossing speed (Vp), in metres per second, the speed level extending over a distance (Dvf) in metres, greater than a value corresponding to said crossing speed (Vp) multiplied by a level time lying between one second and three seconds.

3. Method according to the preceding claim, the crossing speed (Vp) lying between 7 metres per second and 20 metres per second.

4. Method according to the preceding claim, the control distance (Dc) being a function of a predetermined braking deceleration lying between 2.5 metres per second squared and 4 metres per second squared.

5. Method according to either one of Claims 2 and 3 and according to Claim 4, the control distance (Dc) being equal to the crossing speed (Vp) squared, divided by twice the braking deceleration.

6. Method according to any one of the preceding claims, the light sensor (2) comprising a vision device such as a camera, and a classifier capable of distinguishing a traffic light (10) in the go state from a traffic light (10) in the stop state, on a shot taken by said vision device.

7. Computer program product comprising program instructions implementing the steps of the method according to any one of the preceding claims, when the program instructions are executed by a control device of a vehicle (1) comprising a computer (4) capable of determining a distance (Dvf) between the vehicle (1) and a traffic light (10), a speed regulator (3), and a light sensor (2) capable of detecting the state of said traffic light (10) out of a stop state and a go state.
